# EUROPÄISCHE PATENTANMELDUNG

(11) **EP 4 851 485 A1**
(43) Veröffentlichungstag der Anmeldung: **09.12.2026**
(21) Anmeldenummer: 26181864.5
(22) Anmeldetag: 29.05.2026
(51) Int. Cl.: F16G 5/04, D03D 1/00

(54) **VERFAHREN ZUR HERSTELLUNG EINES KRAFTÜBERTRAGUNGSRIEMENS UND SOLCHE KRAFTÜBER-TRAGUNGSRIEMEN**

(30) Priorität: 02.06.2025 DE 102025121392
(71) Anmelder: Arntz Beteiligungs GmbH & Co. KG, 37671 Höxter (DE)
(72) Erfinder: Ohlhäuser, Rudolf, 33039 Nieheim (DE); Schünemann, Thorsten, 37603 Holzminden (DE); Neumann, Ralf, 37671 Höxter (DE)
(74) Vertreter: Kröncke, Rolf

(57) **Zusammenfassung**

Die Erfindung betrifft ein Verfahren zur Herstellung eines Kraftübertragungsriemens mit einem beschichteten Gewebe, wobei das beschichtete Gewebe zumindest auf einer Seite des Kraftübertragungsriemens im Kraftübertragungsbereich zumindest teilweise eine Textilbeschichtung aufweist mit dem Schritt des Aufbringens des Textils auf die die Oberfläche des Kraftübertragungsriemens ausbildende Seite des Gewebes mit anschließender Friktion des Gewebes mit einem Friktionsmittel, so dass das Friktionsmittel nicht durch das Textil tritt. In einem weiteren Aspekt wird ein entsprechender vulkanisierter Kraftübertragungsriemen, der insbesondere ein Keilriemen oder ein Kraftband ist, bereitgestellt. Schließlich wird ein Verfahren zur Nachbearbeitung eines solches Kraftübertragungsriemens sowie ein entsprechend nachbearbeiteter, vulkanisierter Kraftübertragungsriemen beschrieben.

## Beschreibung

Die Erfindung betrifft ein Verfahren zur Herstellung eines Kraftübertragungsriemens mit einem beschichteten Gewebe, wobei das beschichtete Gewebe zumindest auf einer Seite des Kraftübertragungsriemens im Kraftübertragungsbereich zumindest teilweise eine Textilbeschichtung aufweist, mit dem Schritt des Aufbringens des Textils auf die die Oberfläche des Kraftübertragungsriemens ausbildende Seite des Gewebes mit vorangehender Friktion des Gewebes mit einem Friktionsmittel derart, dass nach dem Aufbringen des Textils das Friktionsmittel nicht durch das Textil tritt. In einem weiteren Aspekt wird ein entsprechender vulkanisierter Kraftübertragungsriemen, der insbesondere ein Keilriemen oder ein Kraftband ist, bereitgestellt.

### Stand der Technik

Kraftübertragungsriemen bestehen prinzipiell aus einem von der Kraftübertragungsseite abgewandten Riemenrücken und einem Grundkörper, an dem eine Kraftübertragungszone ausgebildet ist. Der Grundkörper kann z. B. bei Keilriemen oder Keilrippenriemen keilförmig ausgebildet sein oder mehrere Rippen aufweisen. Das gewählte Profil ist auf die dem Riemen aufnehmende Riemenscheibe genau abgestimmt. Die Kraftübertragung erfolgt in erster Linie über die Flanken des Keils oder der Rippen dieser Keilriemen oder Keilrippenriemen. Zwischen dem Grundkörper und dem Riemenrücken sind in der Regel Festigkeitsträger zu Trägern angeordnet, die aus einzelnen Strängen oder Korden oder auch aus Flächengebilden bestehen können.

Solche Kraftübertragungsriemen oder Antriebsriemen werden in verschiedensten Arten von Riemenantrieben eingesetzt, z. B. in Form von Keilriemen, Zahnriemen oder sonstigen Arten von Reibriemen. Die Übertragung der Antriebskraft oder der Abtriebskraft zwischen einer Riemenscheibe und einem Antriebsriemen oder Kraftübertragungsriemen, diese beiden Ausdrücke werden im Folgenden synonym eingesetzt, kann formschlüssig und/oder durch Haftreibung und/oder Gleitreibung erfolgen. Bei Übertragung der Kraft durch Haftreibung zwischen der Kraftübertragungszone des Kraftübertragungsriemens und einer Mantelfläche einer Riemenscheibe kann die Kraftübertragungszone flach, z. B. bei Flachriemen, mit einer in Laufrichtung und Querschnittsprofil gleichbleibender Rippenstruktur, wie bei Keilrippenriemen oder mit einer Laufrichtung gleichbleibenden, trapezförmigen Querschnitt, wie beispielsweise bei Keilrippenriemen, ausgebildet sein.

Bei der Kraftübertragung sind verschiedene Aspekte zu berücksichtigen. Neben dem Verschleiß der Antriebsriemen spielt der Reibwert und dessen Reduzierung eine wichtige Rolle bei der Kraftübertragung. Hohe Reibwerte, auch als Reibbeiwert oder Reibkoeffizient ausgedrückt, erhöhten den Wirkungsgrad des Riementriebs aufgrund der inneren und äußeren Reibung bei Übertragung des Drehmomentes. Gerade im Bereich von Keilriemen und Kraftbändern als Antriebsriemen spielen die Reibwerte und deren Reduzierung eine wichtige Rolle.

Für viele Anwendungen liegen sowohl kraftübertragungsseitig wie auch riemenrückenseitig Textilauflagen und/oder Folienauflagen vor. Keilriemen weisen unter anderem eine Ummantelung mit einem Textil, meist ein Gewebe, auf. Diese Gewebe dienen zur besseren Kraftübertragung zwischen den Kraftübertragungsriemen und den Kraftübertragungsscheiben. Sie erlauben darüber hinaus ein Vermindern des Abriebs, ein Verringern der Einrissneigung sowie eine Erhöhung der Verschleißbeständigkeit, erlauben aber insbesondere auch eine Verbesserung der Reibwerte. Zur Reduzierung der Kraftspitzen bei Kupplungsriemen und anderer Riemen mit Sonderfunktion muss der Reibwert reduziert werden, um einen Riemenschlupf zu begünstigen.

Diese Gewebe können mit verschiedenen Techniken auf dem Riemenkörper der Antriebsriemen aufgebracht werden. Wichtig ist hierbei die gute Verbindung des Riemenkörpers mit dem Gewebe, um ein Ablösen des Gewebes zu vermeiden. Es werden unter anderem Haftvermittler, aber auch vulkanisierbare Polymermischungen auf das Gewebe ein- oder beidseitig aufgebracht, um das Gewebe mit dem Riemenkörper zu verbinden. Allerdings soll bei Kupplungsriemen dabei vermieden werden, dass die entsprechenden Polymere oder Haftvermittler durch die Maschen des Gewebes durchdringen und dann auf der äußeren Oberfläche des Kraftübertragungsriemens vorliegen. Diese auf der äußeren Oberfläche vorliegenden Polymere oder Haftvermittler beeinflussen negativ die Eigenschaften des Riemens, z. B. des Reibwertes. Grundsätzlich erfolgt eine Beschichtung der benutzten Gewebe mittels Streichverfahren, um die Gewebe als (semi)beschichtete Gewebe zu erhalten. Das Verfahren hat Vor- und Nachteile, so setzt das Streichverfahren aufwändige Schritte zur Herstellung einer einseitigen Sperrschicht voraus, auf die dann nicht vulkanisierte Polymermischungen oder Haftvermittler zur Haftvermittlung aufgebracht werden. Alternative Verfahren für Streichverfahren, Friktionsverfahren umfassen das Einbringen der Friktionsmittel in das Gewebe, z. B. mithilfe eines Kalanders. Allerdings drückt üblicherweise die Mischung durch die Maschen des Gewebes derart durch, dass eine nicht immer gewünschte beidseitige Beschichtung erfolgt. Hier liegt dann das entsprechende Friktionsmittel auch auf der äußeren Oberfläche des anschließend hergestellten Kraftübertragungsriemens vor.

Verschiedene Lösungswege wurden vorgeschlagen, viele erfordern aber eine umfangreiche Vorbearbeitung des Gewebes und einer Vielzahl von Verfahrensschritten zum Erhalt des beschichtenden Gewebes, z. B. durch Ausbilden von Sperrschichten, mehrfaches Auftragen der entsprechenden Mittel etc. Friktionsverfahren sind z. B. dadurch begrenzt, dass der Auftrag so erfolgen muss, dass die Mischung durch das Gewebe mitgenommen wird. Entsprechend ist die Menge durch die Eigenschaften der Mischung und des Gewebes limitiert.

Es ist somit wünschenswert Verfahren bereitzustellen, die die Beschichtung des Gewebes verbessern, um Kraftübertragungsriemen bereitzustellen, deren Reibbeiwerte gering sind und mit einem geringen Abrieb der Textilgewebe, sodass Verschleiß- und Reibungswiderstand reduziert sind.

### Beschreibung der Erfindung

Diese Aufgabe wird durch ein Verfahren eingangs genannter Art dadurch gelöst, dass das beschichtete Gewebe, welches zumindest auf einer Seite des Kraftübertragungsbereiches des Kraftübertragungsriemens zumindest teilweise eine Textilbeschichtung aufweist. Dabei wird auf die Oberfläche des Gewebes eine Textilbeschichtung aufgebracht, wobei diese die Oberfläche des Kraftübertragungsriemens ausbildet. Das Aufbringen der Textilbeschichtung erfolgt nach der Friktion des Gewebes mit einem Friktionsmittel derart, dass das Friktionsmittel nicht durch das Textil tritt.

D. h., der Gegenstand richtet sich in einem ersten Aspekt auf ein Verfahren zur Herstellung eines Kraftübertragungsriemens mit einem beschichteten Gewebe, wobei das beschichtete Gewebe zumindest auf einer Seite des Kraftübertragungsriemens im Kraftübertragungsbereich eine Textilbeschichtung aufweist, umfassend den Schritt des Aufbringens des Textils auf die die Oberfläche des Kraftübertragungsriemens ausbildende Seite des Gewebes mit vorangehender Friktion des Gewebes mit einem Friktionsmittel derart, dass nach dem Aufbringen des Textils das Friktionsmittel nicht durch das Textil tritt.

Es zeigte sich, dass das Aufbringen einer Textilbeschichtung nach dem Beschichten des Gewebes mit dem Polymer bzw. Haftungsmittel ein unerwünschtes Kleben durch das Haftmittel auf der Oberfläche und ein Durchdringen der Textilbeschichtung verhindert wird.

Unter dem Ausdruck Textil wird solange nicht anders ausgeführt, allgemein ein flächenförmiges Gebilde aus textilen Rohstoffen verstanden. Diese schließen ein flächenförmiges textile Gebilde wie Gewebe, Maschenware wie Gewirke und Gestricke, Nähgewirke, Geflechte, Vliesstoffe, Gelege und Filze ein.

Dieses erfindungsgemäß eingesetzte Textil ist dabei bevorzugt ein leichtes und einfaches Textil, das die Steifigkeit des Gewerbes nicht oder nur gering beeinflusst. In einer Ausführungsform ist das Textil ein dehnbares Textil, wie eine Maschenware oder ein Vlies.

Ein geeignetes Textil ist insbesondere eine Maschenware, wie eine Strickware oder Wirkware, oder ein Vlies. Besonders geeignet ist hierbei ein Papiervlies. Ein Papiervlies ist kostengünstig und beeinflusst nicht oder nur gering die Steifigkeit des Gewerbes. Alternativ eignet sich als Textil eine Strickware. Die Strickware ist ebenfalls kostengünstig und beeinflusst nicht oder nur gering die Steifigkeit des Gewebes.

In einem weiteren Aspekt ist das hierin beschriebene Gewebe ein Textilgewebe. Das erfindungsgemäße Gewebe kann eines sein, wie es üblicherweise bei Riemen Verwendung findet. Dies schließt Gewebe, insbesondere Textilgewebe ein, die als Riementextilien gebräuchlich oder geeignet sind. Vorliegend beinhaltet das Textilgewebe weiterhin Strickwaren und Wirkwaren.

In einer Ausführungsform können somit das Gewebe als auch die Textilbeschichtung eine Strickware sein.

Geeignete erfindungsgemäße Textile und erfindungsgemäße Gewebe sind solche mit den für den Fachmann bekannten Qualitäten, Textilmaterialien bzw. Fäden und/oder Fasermaterial, Faserstärken, Gewebedichten, Bindungen und Flächengewichten. In einer Ausführungsform ist dabei das Textilmaterial der erfindungsgemäß eingesetzten Textilen und Gewebe eines ausgewählt aus Baumwolle, Polyamid, Polyester, Aramid, Polyester-Baumwollgemisch oder weiterer bekannter Kunstfasern sowie deren Kombination.

Die Gewebeauflage ist in einer Ausführungsform im textiltechnischen Sinne ein textiles Flächengebilde aus dem Fadensystem Kette und Schuss mit entsprechenden Kettfäden für das Fadensystem Kette und Schussfäden für das Fadensystem Schuss, wenn das Gewebe ein Gewebe im eigentlichen Sinne ist. Die Textilmaterialien sind übliche, kommerziell erhältliche Textilmaterialien, wobei standardmäßig solche als Gewebe eingesetzt werden, bei denen der Kettfadenmassenanteil stets größer ist als der Schussfadenmassenanteil. Alternativ kann aber auch der Schussfadenmassenanteil größer sein als der Kettfadenmassenanteil. Es gibt auch Gewebe, bei denen eine gleiche Fadenzahl vorliegt.

Besonders geeignete Textile schließen ein: Strickware, Wirkware und Vlies, sowie Gelege.

Das vorliegende Gewebe mit der Textilbeschichtung kann auch als ein semibeschichtetes Gewebe oder Semi-Gewebe bezeichnet werden.

In einem Aspekt ist das Friktionsmittel, das in das Gewebe eindringt, das den Riemenkörper des Kraftübertragungsriemens ausbildende Polymer. Die erfindungsgemäßen Kraftübertragungsriemen werden aus üblichen Polymeren gebildet, wie z. B. Chloropren-Mischungen und übliche elastomere Materialien, aber auch Thermoplaste.

Geeignete Polymere schließen insbesondere ein:; NBR, CR, SBR, EPDM, EPM, EBDM, EVM und Mischungen von zwei oder mehr hiervon. Alternativ kann das Friktionsmittel auch ein Haftvermittler sein, der dann entsprechend die Haftvermittlung zwischen Gewebe und Polymer des Riemenkörpers verbessert. Geeignete Haftvermittler schließen ein: RFL oder RF-freie Haftvermittler. Der Haftvermittler kann aus derselben Kautschuk- bzw. Elastomerklasse sein wie der Körper, er kann aber auch aus anderen Kautschuk- bzw. Elastomerklassen stammen.

In einem Aspekt erfolgt das Aufbringen des Textils, wie dem Papiervlies oder der Strickware, auf das Gewebe mit einem Friktionskalander. Dem Fachmann sind entsprechende Friktionskalander bekannt, bei denen bei entsprechenden Geweben mittels Walzen Friktionsmittel in die Freiräume des Gewebes gepresst werden. Mit dem Einbringen des Gewebes in den Spalt erfolgt auf der dem Friktionsmittel gegenüberliegenden Seite das Einbringen der Textilbeschichtung. Diese kann ggf. vor dem Einbringen in den Friktionskalander auf das Gewebe kaschiert werden.

Dem Fachmann sind entsprechend geeignete Verfahren zum Aufbringen des Textils als Textilbeschichtung auf einer Seite des Gewebes bekannt.

Ggf. kann das kaschierte Gewebe vor dem Friktionskalander weiteren Prozessen unterworfen werden, wie einem notwendigen Schrägschneiden.

Alternativ kann eine Kaschierung des Textils mit dem Gewebe an einer Rotations-/Vulkanisationsmaschine, wie eine AUMA, bei herabgesenkten Temperaturen erfolgen. Das heißt, das Kaschieren erfolgt bei einer Temperatur bei der keine oder nur sehr geringe Vulkanisierung von entsprechend vorliegenden Elastomeren oder Kautschuk erfolgt.

Diese so behandelten, friktionierten/kaschierten Gewebe können dann zur weiteren Herstellung des Kraftübertragungsriemens mit üblichen Verfahren eingesetzt werden.

In einer anderen Ausführungsform wird das Textil in automatisierten Trommel- und Bandvulkanisierungsanlagen, die auch als Rotations-/Vulkanisationsmaschinen beschrieben werden, sogenannte AUMA-Anlagen, dem vulkanisierenden Kraftübertragungsriemen zugeführt. Diese AUMA-Anlagen beinhalten das Zusammenbringen von entsprechenden Folien oder Platten, beschichtetem Gewebe, Bändern, Riemen und auch vorgeformten Artikeln, die z.B. direkt im Anschluss an Kalander und Beschichtungsprozess vulkanisiert werden. Üblicherweise weist eine entsprechende Anlage eine beheizte, langsam rotierende Stahltrommel und ein endlos geschweißtes Stahlblechband auf, das durch Umlenkrollen und Spannwalze an die Trommel gepresst wird. Das zu vulkanisierende Material läuft zwischen Trommel und Stahlband ein, wird auf die Trommel gepresst und dabei vulkanisiert. Alternativ zum Stahlband kann auch ein Panzerband eingesetzt werden. Erfindungsgemäß wird bei diesem Prozess auch die Textilbeschichtung auf das Gewebe aufgebracht, sodass ein Durchpressen des Friktionsmittels durch das Gewebe erfolgt, dieses Friktionsmittel aber nicht vollständig durch das aufgebrachte Textilhindurchgepresst wird. Dadurch wird das Ausbilden einer zumindest teilweisen Außenschicht aus Friktionsmittel auf dem äußersten Kraftübertragungsfläche verhindert. Insbesondere das Ausbilden einer Vulkanisationshaut wird dadurch zumindest teilweise vermieden.

Erfindungsgemäß ist das Verfahren eines, wobei das Textil nach dem Vulkanisieren zumindest teilweise auf der Oberfläche des Kraftübertragungsriemens vorliegt. D. h., nach dem Aufbringen des Gewebes, das auf einer Seite die Textilbeschichtung aufweist, weist der vulkanisierte Kraftübertragungsriemen diese Textilbeschichtung auf der äußersten Oberfläche auf.

Wie ausgeführt, ist das erfindungsgemäße Verfahren eines, bei dem zumindest teilweise keine Vulkanisierungshaut auf dem Bereich des Gewebes an der Außenseite vorliegt, wo das Textil auf dem Gewebe aufgebracht ist.

Dieses erlaubt die Reibwerte des Kraftübertragungsriemens zu verbessern. Der Reibbeiwert ist verringert, eine Reduktion des Verschleißes der Riemen bleibt erhalten. In einer Ausführungsform ist das erfindungsgemäße Verfahren eines zum Herstellen von Kraftübertragungsriemen mittels Endlosverfahren.

In einer Ausführungsform handelt es sich bei dem Herstellungsverfahren um eines zum Herstellen von Keilriemen, wie Kraftband oder Kupplungsriemen. Andere Arten von Kraftübertragungsriemen, wie Antriebsriemen z. B. in Form von Breitkeilriemen oder Schmalkeilriemen sind möglich.

In einem weiteren Aspekt werden Kraftübertragungsriemen, erhältlich mit dem erfindungsgemäßen Verfahren, beschrieben. Diese Kraftübertragungsriemen sind z. B. Keilriemen oder Kraftbänder, wie Kupplungsriemen. Erfindungsgemäße Riemen eignen sich insbesondere beim Einsatz im Bereich von Maschinenbau, wo eine höhere Leistungsübertragung gewünscht wird. Dieses betrifft insbesondere Schmalkeilriemen, z. B. solche der gängigen Größe SPZ, SPA, SPB und SPC.

Andere Bereiche für die die erfindungsgemäß hergestellten Kraftübertragungsriemen besonders geeignet sind schließen ein: Riemen mit Sonderfunktionen und Spezialbereichen, wie Kupplungsriemen. Kupplungsriemen bestehen meist aus reibungsarmen Spezialgewebe und unter anderem einem Kupplungsgewebe und sind speziell für Maschinen mit Kupplungsfunktion entwickelt, die mittels Rückspannrollen gespannt werden. Das äußere Gewebe gewährleistet einen geräuschlosen Kupplungseingriff und eine erhöhte Verschleißbeständigkeit. Weiterhin ist eine hohe Festigkeit und eine sehr gute Beständigkeit gegen Stoßbelastungen notwendig. Solche Riemen werden z. B. bei der Garten- und Parkpflege eingesetzt, wie Aufsitz-Rasenmäher und Bodenfräsen. Bei diesen Maschinen hängen die Anforderungen an die Kraftübertragung stark vom jeweiligen Einsatz ab.

Erfindungsgemäß können die Kraftübertragungsriemen, wie sie hierin beschrieben werden, insbesondere mit dem erfindungsgemäßen Verfahren hergestellt einer Nachbearbeitung unterworfen werden.

Schließlich wird ein Riementrieb bereitgestellt, der einen erfindungsgemäßen Kraftübertragungsriemen oder einen erfindungsgemäß herstellbaren Kraftübertragungsriemen umfasst und weiterhin eine erste Riemenscheibe und eine zweite Riemenscheibe zum Antrieb und Antrieb bei Kraftübertragung mit Hilfe des erfindungsgemäßen Kraftübertragungsriemen.

Das erfindungsgemäße Verfahren ist dabei eines, das als ein lösungsmittelfreies Verfahren durchgeführt werden kann.

Die Erfindung wird nachfolgend anhand von Ausführungsbeispielen unter Verwendung von Zeichnungen näher erläutert.

### Es zeigen:

- Figur 1: Die Figur 1 zeigt eine entsprechende Semi-Gewebe-Beschichtung mit Friktionskalander.
- Figur 2: Die Figur 2 zeigt das Aufbringen des Textils auf das Gewebe im Rahmen einer AUMA.

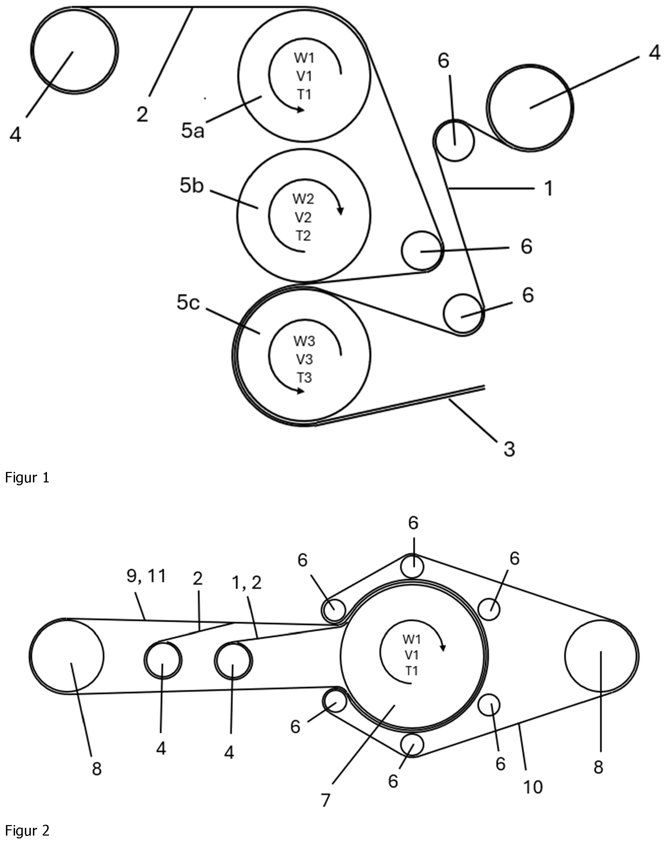

In den Abbildungen der Figur 1 und Figur 2 werden unterschiedliche Möglichkeiten der erfindungsgemäßen Herstellung des beschichteten Gewebes und Herstellung eines Kraftübertragungsriemens dargestellt.

In den Abbildungen sind entsprechend beschichtete Gewebe 3 mit Gewebe 1 und Papiervlies 2 dargestellt.

In der Figur 1 wird die Herstellung des beschichteten Gewebes aus einem gummierten Gewebe 1 und Papiervlies 2 mit Hilfe von Friktionskalandern 5a, 5b und 5c dargestellt. Dabei werden von oben das gummierte Gewebe 1 mit dem ggf. bereits kaschierten Papiervlies 2 über Umlenkrollen 6 in den Spalt gegeben. Auf das gummierte Gewebe 1 wird einseitig das Papiervlies 2 aufgebracht, dabei werden die Maschen durch das Papiervlies 2 verschlossen. Nach dem Beschichtungsprozess am Friktionskalander 5a, 5b und 5c kann ggf. das Hilfsgewebe 2 wieder in einem Nachfolgeprozess entfernt werden, z. B. durch Schrägschneiden oder es verbleibt auf dem kaschierten Gewebe 3 zur weiteren Herstellung des Kraftübertragungsriemens. Die Kalanderwalzen werden entsprechend so gesteuert, dass unterschiedliche Geschwindigkeiten der Walze vorliegen. Dem Fachmann sind entsprechende Parameter für die Temperaturen T1 und T2, für die Geschwindigkeiten V1 und V2 sowie für die Kraft W1 und W2 bekannt. Aus dem Spalt wird dann das beschichtete Gewebe 3 mit dem Papiervlies auf der anderen Seite des Gewebes erhalten.

Die Figur 2 zeigt die erfindungsgemäße Herstellung eines Kraftübertragungsriemens mithilfe einer AUMA. Dabei wird die Mischung 9 zu der beheizten, langsam rotierenden Stahltrommel 7 geführt. Gleichzeitig erfolgt ein Zuführen des Gewebes 1 über eine Abwickelstation 4. Alternativ kann ein Antriebsriemen 11 der langsam rotierenden Stahltrommel 7 zugefügt werden. Gleichzeitig erfolgt eine Zufuhr des Papiervlieses 2 über eine Abwickelstation 4 zu der entsprechenden Stahltrommel 7.

Das endlos geschweißte Stahlblechband 10 führt entsprechend die Materialien über die Stahltrommel 7 durch die Außenheizung zur Vulkanisierung des Kraftübertragungsriemens. Über die Umlenkrollen 6 wird das Stahlband 10 entsprechend umgelenkt. Dabei wird nach der Umlenkrolle oder vulkanisierte Kraftübertragungsriemen vom Stahlband getrennt.

Wenn erfindungsgemäß das Kaschieren des Gewebes mit dem Textil mit einer Rotations-/Vulkanisationsmaschine gegebenenfalls bei einer Temperatur unterhalb der Vulkanisationstemperatur durchgeführt wird, wird in der in der Figur 2 dargestellten Einrichtung ein zuvor friktioniertes Gewebe 9 zugeführt und Friktion und Kaschierung erfolgt über die Stahltrommel 7 und dem Stahlband 10, wobei die Stahltrommel 7 auf eine Temperatur geheizt ist, die unterhalb der Vulkanisierungstemperatur der zugeführten Mischung liegt.

### Bezugszeichenliste

- 1: Gummiertes Gewebe
- 2: Papiervlies
- 3: Kaschiertes Gewebe
- 4: Abwickelstationen
- 5a, 5b, 5c: Kalanderwalzen
- 6: Umlenkrollen
- 7: Vulkanisationstrommel
- 8: Spannrollen
- 9: Mischung
- 10: Panzerband, Stahlband
- 11: Antriebsriemen

## Patentansprüche

1. Verfahren zur Herstellung eines Kraftübertragungsriemens mit einem beschichteten Gewebe, wobei das beschichtete Gewebe zumindest auf einer Seite des Kraftübertragungsriemens im Kraftübertragungsbereich eine Textilbeschichtung aufweist, umfassend den Schritt des Aufbringens des Textils auf die die Oberfläche des Kraftübertragungsriemens ausbildende Seite des Gewebes mit vorangehender Friktion des Gewebes mit einem Friktionsmittel derart, dass nach dem Aufbringen des Textils das Friktionsmittel nicht durch das Textil tritt.

2. Verfahren zur Herstellung eines Kraftübertragungsriemens nach Anspruch 1, wobei das Textil ein Vlies, wie ein Papiervlies, oder eine Strickware ist.

3. Verfahren zur Herstellung eines Kraftübertragungsriemens nach Anspruch 1 oder 2, wobei das Gewebe ein Textilgewebe, wie eine Strickware, ist.

4. Verfahren zur Herstellung eines Kraftübertragungsriemens nach einem der vorherigen Ansprüche, wobei das Friktionsmittel das den Riemenkörper des Kraftübertragungsriemens ausbildende Polymer ist.

5. Verfahren zur Herstellung eines Kraftübertragungsriemens nach einem der vorherigen Ansprüche, wobei der Kraftübertragungsriemen ein Keilriemen, wie ein Kraftband oder Kupplungsriemen, ist.

6. Verfahren zur Herstellung eines Kraftübertragungsriemens nach einem der vorherigen Ansprüche, wobei das Aufbringen des Textils auf das Gewebe mit einem Friktionskalander durchgeführt wird.

7. Verfahren zur Herstellung eines Kraftübertragungsriemens nach einem der Ansprüche 1 bis 5, wobei das Aufbringen des Textils auf das Gewebe mit einer Rotations-/Vulkanisationsmaschinen gegebenenfalls bei einer Temperatur unterhalb der Vulkanisationstemperatur durchgeführt wird.

8. Verfahren zur Herstellung eines Kraftübertragungsriemens nach einem der Ansprüche 1 bis 5, wobei das Textil in Rotations-/Vulkanisationsmaschinen dem vulkanisierenden Kraftübertragungsriemen zugeführt wird.

9. Verfahren zur Herstellung eines Kraftübertragungsriemens nach einem der vorherigen Ansprüche, wobei das Textil nach dem Vulkanisieren zumindest teilweise auf der Oberfläche des Kraftübertragungsriemens vorliegt.

10. Verfahren zur Herstellung eines Kraftübertragungsriemens nach einem der vorherigen Ansprüche, wobei keine Vulkanisationshaut auf dem Bereich des Gewebes an der Außenseite vorliegt, bei dem das Textil auf dem Gewebe aufgebracht ist.

11. Verfahren zur Herstellung eines Kraftübertragungsriemens nach einem der vorherigen Ansprüche, wobei das Verfahren ein Endlosverfahren ist.

12. Kraftübertragungsriemen erhältlich nach einem der Ansprüche 1 bis 11.

13. Kraftübertragungsriemen nach Anspruch 12, wobei dieser ein Keilriemen oder ein Kraftband, insbesondere ein Kupplungsriemen ist.

14. Riementrieb umfassend einen Kraftübertragungsriemen nach einem der Ansprüche 12 oder 13 oder erhältlich nach einem Verfahren nach einem der Ansprüche 1 bis 11 und einer ersten und zweiten Riemenscheibe zum Antrieb und Abtrieb.
